# EUROPÄISCHE PATENTSCHRIFT

(11) **EP 2 590 799 B1**
(45) Veröffentlichungstag und Bekanntmachung des Hinweises auf die Patenterteilung: **29.04.2015**
(21) Anmeldenummer: 12713032.6
(22) Anmeldetag: 27.03.2012
(51) Int. Cl.: B29C 49/42, B29C 49/48, B29C 49/78, B29C 33/30

(54) **SIMULTANES UMRÜSTEN VON VERARBEITUNGSVORRICHTUNGEN**
SIMULTANEOUS RETROFITTING OF PROCESSING DEVICES
CONVERSION SIMULTANEE DE DISPOSITIFS DE TRAITEMENT

(30) Priorität: 30.05.2011 DE 102011050724
(43) Veröffentlichungstag der Anmeldung: 15.05.2013
(73) Patentinhaber: Krones AG, 93073 Neutraubling (DE)
(72) Erfinder: HAHN, Wolfgang, 93073 Neutraubling (DE)
(74) Vertreter: Benninger, Johannes
(86) Internationale Anmeldenummer: PCT/EP2012/055395
(87) Internationale Veröffentlichungsnummer: WO 2012/163562

(56) Entgegenhaltungen:
- EP-A1- 2 050 557
- WO-A1-2011/026963
- WO-A1-2011/076714

## Beschreibung

Die vorliegende Erfindung betrifft Verfahren zum simultanen manuellen Umrüsten von mindestens zwei Einheiten bzw. simultanen Austausch von mindestens zwei Formatteilen an einer Verarbeitungsvorrichtung, ein System zum simultanen manuellen Umrüsten und eine entsprechend umzurüstende Verarbeitungsvorrichtung.

In der Verpackungsindustrie müssen die Verarbeitungsvorrichtungen bzw. Maschinen zur Herstellung eines Verpackungsartikels bzw. zur Herstellung einer Verpackung, zur Gruppierung von Artikeln oder Gebinden etc. häufig an das jeweilige Produkt angepasst werden. Die Maschinen werden beispielsweise durch Austausch von Formatteilen oder durch Verstellen bestimmter Einheiten entsprechend umgerüstet.

Soll in einer Blasmaschine beispielsweise eine neue Flaschenform produziert werden, müssen die Blasformen entsprechend gewechselt werden. Dies geschieht vorzugsweise manuell oder halb- bzw. vollautomatisch an einem dafür vorgesehenen zugänglichen Platz am Blasrad. Ein halb- oder vollautomatisches Wechseln ist mit erheblichen Kosten für die dafür benötigten Einrichtungen verbunden. Ein Wechseln der Formatteile durch Bedienpersonal ist zudem mit einem hohen Zeitaufwand verbunden.

Im Folgenden wird beispielshaft der manuelle Austausch der Blasformen beschrieben, bei dem die Blasformen durch einen menschlichen Bediener ausgewechselt werden. Nach Austausch einer ersten Blasform wird das Blasrad um einen entsprechenden Winkel gedreht, so dass sich die nächste Blasform in der Austauschposition befindet und ausgewechselt werden kann. Um sicherzustellen, dass sich der Bediener nicht im Bewegungsbereich des Blasrades befindet, erfolgt eine Bewegung des Blasrades nur, wenn der Bediener einen entsprechenden Kontrollschalter betätigt. Dadurch wird die Drehung des Blasrades ausgelöst. Diese Methode des Umrüstens ist sehr zeitaufwendig, da immer nur ein Bediener an der Maschine arbeiten und jeweils nur ein Formatteil austauschen kann. Es wäre denkbar, mindestens zwei Stellen einzurichten, so dass zeitgleich mindestens zwei Formatteile ausgetauscht werden, um die Umrüstzeiten, in denen die Maschine nicht produzieren kann, zu verringern, insbesondere zu halbieren. Problematisch hierbei ist, dass die Sicherheit beider Bediener gewährleistet werden muss.

Es sind Vorrichtungen bekannt, bei denen mehrere Arbeitsöffnungen für den Austausch von Formatteilen und / oder anderen Reparatur bzw. Wartungsarbeiten vorgesehen sind. Es darf allerdings immer nur eine der Arbeitsöffnungen geöffnet sein, damit manuell vom Bediener eine Bewegung des Blasrades innerhalb der Blasmaschine ausgelöst werden kann. Gelöst wird die vorliegende Problematik dadurch, dass der zweite Bediener seinen Arbeitsbereich verlässt und die Arbeitsöffnung verschließt und / oder verriegelt. Erst dann kann bei Bedienung des Kontrollschalters durch den ersten Bediener die Rotation des Blasrades ausgelöst werden. Die dadurch erforderliche Arbeitsweise ist umständlich und dauert relativ lange. Insbesondere führt diese Arbeitsweise zu keiner erheblichen Verringerung der für das Umrüsten benötigten Zeit.

DE 10 2008 004 773 A1 beschreibt ein Verfahren zum Umrüsten einer Blasmaschine, wobei an der Blasmaschine mindestens zwei Arbeitsbereiche vorgesehen sind, an denen jeweils unterschiedliche Prozesse durchgeführt werden. Insbesondere werden zeitgleich Prozesse durchgeführt, die in etwa dieselbe Umrüstzeit aufweisen. Ist der Zeitaufwand für die unterschiedlichen Prozesse verschieden, so richtet sich die Umrüstung nach dem jeweils langsamsten Prozess. Dieser Offenlegungsschrift bezieht sich insbesondere auf das automatisierte Umrüsten einer Blasmaschine und enthält keinen Hinweis darauf, wie die Sicherheit des Personals beim manuellen Umrüsten gewährleistet werden kann.

EP 2 050 557 A1 beschreibt eine Maschine zum Formen von Behältern mit einem Arbeitsbereich zum Anpassen der Maschine an die verarbeiteten Produkte, wobei dem Arbeitsbereich ein Umrüstbereich und eine Verschließbare Arbeitsöffnung zugeordnet sind. Zudem wird ein Verfahren zum simultanen manuellen Umrüsten von mindestens zwei Einheiten bzw. zum simultanen Austausch von mindestens zwei Formatteilen an der Maschine dargestellt. Weiterhin offenbart das Dokument ein System zur Steuerung der Maschine bei Umrüsten und Anpassen der Maschine an neue Produkte.

Aufgabe der Erfindung ist, ein simultanes manuelles Umrüsten von Verarbeitungsvorrichtungen an mindestens zwei Arbeitsbereichen zu ermöglichen, wobei die Sicherheit der mindestens zwei Bediener gewährleistet wird, ohne dass einer der Bediener seinen Arbeitsbereich komplett verlassen und sichern muss.

Die obige Aufgabe wird durch eine Verfahren, ein System und eine Vorrichtung gelöst, die die Merkmale in den Patentansprüchen 1, 7 und 8 umfassen. Weitere vorteilhafte Ausgestaltungen werden durch die Unteransprüche beschrieben.

Die Erfindung bezieht sich auf ein Verfahren zum simultanen manuellen Umrüsten von mindestens zwei Einheiten bzw. zum simultanen Austausch von mindestens zwei Formatteilen an einer Verarbeitungsvorrichtung. Insbesondere bezieht sich die Erfindung auf ein Verfahren zum Umrüsten von Verpackungsvorrichtungen und / oder weiteren Vorrichtungen, die in der Getränkeindustrie, insbesondere bei der Herstellung und Verarbeitung von Flaschen, bei der Abfüllung, der Etikettierung etc. Anwendung finden. Beispielsweise werden nach dem beschriebenen Verfahren gleichzeitig mindestens zwei Blasformen einer Blasformmaschine zur Herstellung von Flaschen aus Vorformlingen ausgetauscht. Mit dem Verfahren können aber auch zwei unterschiedliche Umrüstvorgänge an einer Maschine gleichzeitig durchgeführt werden, wobei die unterschiedlichen Umrüstvorgänge vorzugsweise in etwa denselben Zeitaufwand benötigen. Beispielsweise kann ein Füller, der Flaschen o.ä. mit dem entsprechenden Getränk oder einer anderen Flüssigkeit befüllt, gleichzeitig am Verschließer und am Füller selbst umgerüstet werden. Insbesondere wird der Füller an die neue Flaschenform angepasst und die Verschließerköpfe werden entsprechend ausgewechselt.

Das Verfahren bezieht sich insbesondere auf ein Verfahren zum simultanen manuellen Umrüsten von mindestens zwei Einheiten bzw. simultanen Austausch von mindestens zwei Formatteilen an einer Verarbeitungsvorrichtung mit einem Arbeitsbereich zum Anpassen der Verarbeitungsvorrichtung an die jeweiligen Produkte, wobei der eine Arbeitsbereich jeweils ein Umrüstbereich und eine Arbeitsöffnung umfasst.

Zur Durchführung des erfindungsgemäßen Verfahrens muss die entsprechende Verarbeitungsvorrichtung bestimmte Sicherheitsvorrichtungen umfassen. Deswegen bezieht sich die Erfindung weiterhin auf eine solche Verarbeitungsvorrichtung.

Erfindungsgemäß weist die Verarbeitungsvorrichtung mindestens zwei Arbeitsbereiche zum Anpassen der Verarbeitungsvorrichtung an die jeweiligen Produkte auf. Die Arbeitsbereiche umfassen jeweils einen Umrüstbereich, eine Arbeitsöffnung und eine Aktivierungsvorrichtung. Die Arbeitsöffnungen können in zwei definierten Ist- Zuständen, insbesondere in einem offenen Umrüst- Zustand oder in einem geschlossenen Verarbeitungs- Zustand vorliegen. Im offenen Umrüstzustand ist der Umrüstbereich zugänglich und ein manueller Eingriff in die Verarbeitungsvorrichtung möglich. Im geschlossenen Verarbeitungs- Zustand ist der Umrüstbereich nicht zugänglich und ein manueller Eingriff in die Verarbeitungsvorrichtung nicht möglich. Im Normalbetrieb = Verarbeitungs- Zustand der Verarbeitungsvorrichtung müssen die Arbeitsöffnungen aller Arbeitsbereiche geschlossen sein. Sobald eine der Arbeitsöffnungen geöffnet wird, schaltet sich der Betrieb der Verarbeitungsvorrichtung automatisch aus. Somit wird verhindert, dass bei laufender Vorrichtung manuell in diese eingegriffen werden kann.

Zum simultanen manuellen Umrüsten der Verarbeitungsvorrichtung werden mindestens zwei Arbeitsöffnungen geöffnet. Dadurch ist der Normalbetrieb der Verarbeitungsvorrichtung unterbrochen. Solange mindestens eine Arbeitsöffnung offen ist, kann ein Normalbetrieb der Verarbeitungsvorrichtung auch nicht aufgenommen werden. Auch ein Bewegen von Teilen der Verarbeitungsvorrichtung, insbesondere von umzurüstenden Einheiten oder auszutauschenden Formatteilen innerhalb der Verarbeitungsvorrichtung, darf nur erfolgen, wenn sichergestellt werden kann, dass sich kein Bediener im Gefahrenbereich der Vorrichtung befindet.

Deshalb wird zuerst der Ist- Zustand der Arbeitsöffnungen ermittelt. Insbesondere wird ermittelt, ob und weiche Arbeitsöffnungen geöffnet sind. Hierfür ist mindestens eine Detektionsvorrichtung vorgesehen. Diese kann Bestandteil einer Steuerungseinheit sein. Oder aber die Daten der Detektionsvorrichtung werden an eine Steuerungseinheit übermittelt.

Den geöffneten Arbeitsöffnungen sind jeweils bestimmte Aktivierungsvorrichtungen zugeordnet. Werden die Aktivierungsvorrichtungen durch den jeweiligen Bediener aktiviert, kann dadurch eine Neu- Positionierung von mindestens zwei umzurüstenden Einheiten bzw. Formatteilen ausgelöst werden. Allerdings wird diese Neu-Aktivierung nur ausgelöst bzw. angesteuert, wenn die Aktivierungsvorrichtungen aller geöffneten Arbeitsöffnungen gleichzeitig aktiviert werden. Dadurch wird die Sicherheit der Bediener gewährleistet. Die Aktivierungsvorrichtungen sind insbesondere so innerhalb oder an der Verarbeitungsvorrichtung angebracht, dass sie nicht unabsichtlich aktiviert werden können. Der Bediener muss die Aktivierungsvorrichtung also bewusst aktivieren. Damit wird sichergestellt, dass er sich zu diesem Zeitpunkt nicht im Gefahrenbereich der Vorrichtung befindet.

Die Aktivierung der Aktivierungsvorrichtungen wird an eine Steuerungseinheit übermittelt. Die Steuerungseinheit koordiniert die Daten der Ist- Zustände der Arbeitsöffnungen und der Aktivierung der jeweils den offenen Arbeitsöffnungen zugeordneten Aktivierungsvorrichtungen. Werden die Aktivierungsvorrichtungen aller geöffneten Arbeitsöffnungen gleichzeitig betätigt, aktiviert die Steuerungseinheit die NeuPositionierung der umzurüstenden Einheiten innerhalb der Verarbeitungsvorrichtung.

Werden dagegen keine, eine oder nur ein Teil der Aktivierungsvorrichtungen der geöffneten Arbeitsöffnungen betätigt, erfolgt keine Neu- Positionierung der umzurüstenden Einheiten bzw. Formatteile in die Umrüstbereiche. Insbesondere wird eine Neu- Positionierung aktiv verhindert. Dies ist ein Schutzmechanismus der sicherstellt, dass alle Bediener sich außerhalb des Gefahrbereichs befinden. Sind beispielsweise zwei Arbeitsbereiche offen, so müssen beide diesen Arbeitsbereichen zugeordneten Aktivierungsvorrichtungen gleichzeitig ausgelöst werden. Sind dagegen drei Umrüstbereiche vorgesehen und alle drei Arbeitsbereiche offen, so müssen die drei diesen Arbeitsbereichen zugeordneten Aktivierungsvorrichtungen gleichzeitig ausgelöst werden. Werden nur eine oder zwei der Aktivierungsvorrichtungen gleichzeitig ausgelöst, erfolgt keine Neu- Positionierung innerhalb der Verarbeitungsvorrichtung.

Gemäß einer bevorzugten Ausführungsform kann die Detektionsvorrichtung, die / den Öffnungszustand der Arbeitsöffnungen erkennt, direkt in die Steuerungseinheit integriert sein. Die Detektionsvorrichtung kann beispielsweise einen Kontaktsensor oder Magnetsensor umfassen, der anzeigt, wenn die Tür geöffnet und somit der Kontakt unterbrochen wird. Alternativ kann ein Bilderkennungssensor, eine Lichtschranke o.ä. Verwendung finden, deren Signale durch die Steuerungseinheit entsprechend ausgewertet werden.

Die Aktivierungsvorrichtung ist vorzugsweise ein Druckelement, insbesondere ein Tippschalter, ein Druckknopf o.ä. Insbesondere kann die Aktivierungsvorrichtung nicht ungewollt betätigt werden. Damit die Sicherheit des Bedieners gewährleistet ist, muss dieser die Aktivierungsvorrichtung bewusst auslösen. Das wird auch dadurch gewährleistet, dass die Aktivierungsvorrichtung so innerhalb oder an der Verarbeitungsvorrichtung angebracht ist, dass sich der Bediener zumindest teilweise, insbesondere zumindest weitgehend aus dem Gefahrenbereich heraus bewegen muss, um die Aktivierungsvorrichtung zu aktivieren. Alternativ und / oder zusätzlich muss beispielsweise ein gewisser Druck für eine gewisse Mindestzeit auf die Aktivierungsvorrichtung ausgeübt werden, damit die Steuereinheit die Neu- Positionierung innerhalb der Verarbeitungsvorrichtung veranlasst.

Damit die mindestens zwei Bediener ihre Arbeit koordinieren können, können die Arbeitsbereiche Kommunikationsmittel umfassen. Beispielsweise kann ein Leuchtmittel oder ein akustisches Mittel vorgesehen sein, das im zweiten Arbeitsbereich aktiviert wird, sobald der Bediener im ersten Arbeitsbereich die Aktivierungsvorrichtung betätigt. Dementsprechend ist im ersten Arbeitsbereich ebenfalls ein Leuchtmittel oder ein akustisches Mittel vorgesehen, welches bei Betätigung der Aktivierungsvorrichtung im zweiten Arbeitsbereich ausgelöst wird. Als Leuchtmittel kann beispielsweise eine Lampe vorgesehen sein, die leuchtet, sobald der andere Bediener den Tippschalter etc. drückt. Handelt es sich bei dem Kommunikationsmittel um ein akustisches Signal, so ertönt dies vorzugsweise nur kurz. Alternativ kann auch eine Sprechfunkanlage für die mündliche Kommunikation zwischen den mindestens zwei Bedienern vorgesehen sein. Diese kann sowohl in die Arbeitsbereiche integriert sein oder aber mittels Kopfsprechanlage erfolgen.

Handelt es sich bei der Verarbeitungsvorrichtung um eine Vorrichtung mit einem rotierenden Arbeitsstern, an der bei einer Produktumstellung Formatteile an die neuen Produkte anzupassen sind, löst die Steuerungseinheit eine Rotation des Arbeitssterns um einen bestimmten Winkel aus, so dass die als nächstes auszutauschenden Formatteile neu positioniert, insbesondere in den Umrüstbereichen angeordnet werden. Der Rotationswinkel wird beispielsweise manuell in die Steuerungseinheit eingegeben. Alternativ berechnet die Steuerungseinheit den notwendigen Rotationswinkel des Arbeitssterns in Abhängigkeit davon, wie viele Arbeitsbereiche geöffnet sind.

Bei der Verarbeitungsvorrichtung kann es sich auch um eine Vorrichtung mit einem zumindest teilweise linearen Verarbeitungsbereich handeln, die eine Mehrzahl von umzurüstenden Einheiten bzw. auszuwechselnden Formatteilen aufweist. In diesem Fall löst die Steuerungseinheit eine Bewegung der Einheiten bzw. Formatteile um eine bestimmte Strecke aus, so dass die als nächstes umzurüstenden Einheiten bzw. auszuwechselnden Formatteile in den jeweiligen Umrüstbereichen angeordnet werden. Auch hierbei kann die Bewegungsstrecke in Abhängigkeit der Anzahl der geöffneten Arbeitsbereiche variieren.

Eine Verarbeitungsvorrichtung mit mehreren Arbeitsbereichen zum simultanen manuellen Umrüsten kann weiterhin auch manuell nur an einem Arbeitsbereich umgerüstet werden. Ist nur eine Arbeitsöffnung geöffnet, da aufgrund von Personalmangel o.ä. nur durch einen Bediener umgerüstet werden soll, so ist auch nur die Aktivierung der dem Arbeitsbereich zugeordneten einen Aktivierungsvorrichtung notwendig.

Die Erfindung bezieht sich weiterhin auf ein System zur Steuerung einer Verarbeitungsvorrichtung beim Umrüsten oder Anpassen der Verarbeitungsvorrichtung an neue Produkte. Erfindungsgemäß umfasst das System Detektionsvorrichtungen, beispielsweise Sensoren o.ä., zur Ermittlung des Öffnungszustands von Arbeitsöffnungen in mindestens zwei Arbeitsbereichen. Weiterhin erfasst das System die Aktivierung von Aktivierungsvorrichtungen und ordnet diese Signale den geöffneten Arbeitsöffnungen zu. Werden die Aktivierungsvorrichtungen aller geöffneten Arbeitsöffnungen gleichzeitig aktiviert, dann steuert das System eine Neu- Positionierung der umzurüstender Einheiten oder auszutauschender Formatteile. Weiterhin kann vorgesehen sein, dass der Bediener ein entsprechendes Signal, beispielsweise ein akustisches und / oder optisches Signal, erhält, wenn ein entsprechender Umlauf erfolgt ist.

Mit der beschriebenen Erfindung werden die Nachteile herkömmlicher Vorrichtungen beim Umrüsten und / oder gleichzeitiger Wartung der Vorrichtungen vermieden. Die hierfür benötigte Zeit kann ohne große zusätzliche Kosten erheblich reduziert werden.

Eine spezielle Ausführungsform der Erfindung wird nunmehr anhand einer Umformungseinrichtung, insbesondere anhand eines Blasformmoduls beschrieben. Sollen mit dem Blasformmodul neue Produkte, insbesondere eine andere Flaschenform, hergestellt werden, so muss das Modul mit neuen Blasformen ausgestattet werden. Das Umrüsten bzw. der Wechsel der Blasformen erfolgt manuell an mindestens zwei Arbeitsplätzen durch mindestens zwei Bediener im so genannten Tippbetrieb. An den Wechselplätzen sind im Innenbereich des Blasformmoduls, außerhalb des Blasrads in den Arbeitsbereichen jeweils Tipptaster vorgesehen, die von den mindestens zwei Bedienern gleichzeitig betätigt werden müssen, damit sich das Modul entsprechend neu einstellt. Beispielsweise müssen zwei entsprechende Tipptaster an zwei Wechselplätzen betätigt werden, damit die Blasformen in einem Blasformmodul entsprechend bewegt werden, so dass die als nächstes auszutauschenden Blasformen die jeweiligen Wechselpositionen einnehmen. Die Tipptaster können hierbei so angebracht sein, dass sich der Bediener unter Umständen noch im Gefahrenbereich des Blasrads befindet, wobei im Allgemeinen keine Gefahr für den Bediener besteht, insbesondere da durch die Aktivierung der Tipptaster nur eine sehr langsame Bewegung des Blasrads ausgelöst wird. Die verbleibende Restgefahr ist minimal und muss in Kauf genommen werden. Beim Entstehen einer Problemsituation würde der Bediener den Taster loslassen, was zu einem sofortigen Stillstand des Blasformmoduls führt.

Die Wechselpositionen der Blasformen werden insbesondere von einer Steuerung vorgegeben. Der Tippbetrieb wird automatisch an den nächsten Wechselpositionen unterbrochen. Anschließend erfolgt ein Austausch der Blasformen durch die zwei Bediener. Ein erneutes Starten vom Tippbetrieb erfordert das erneute gleichzeitige Drücken der zwei Tipptaster durch beide Bediener.

Weiterhin ist das gezielte Anfahren einer bestimmten Wechselposition bei Betrieb mit sog. halber oder variabler Beladung möglich. Dabei kann über die Vorwahl einer bestimmten Beladung und entsprechende Programmierung der Steuerungseinheit der jeweilige Blasformträger, dessen Blasform entnommen und / oder dessen Blasform neu eingesetzt werden muss, gezielt in Position gebracht werden. Dabei ist denkbar, dass die zu wechselnde Blasform oder der zu öffnende Blasformträger beispielsweise durch ein optisches Signal, durch einen RFID- Chip o.ä. gekennzeichnet ist. Es können beispielsweise unterschiedliche optische Signale für unterschiedliche Formen bzw. Wechselvorgänge verwendet werden.

Weiterhin kann vorgesehen sein, dass der zweite Benutzer ein Signal bekommt, wenn der erste Benutzer seinen Tipptaster betätigt. Dies kann beispielsweise durch optische und / oder akustische Signale erfolgen. Weiterhin kann vorgesehen sein, dass sich die Bediener (fern)mündlich verständigen können, beispielsweise über den Wechselplätzen zugeordnete Sprechanlagen, vorzugsweise kabellose Kopfsprechhörer o.ä.

Eine weitere Möglichkeit ist der Einsatz jeweils eines Zwei-Hand Tasters, der vom jeweiligen Bediener nach Abschluss des Formenwechsels betätigt wird. Bei einem Zwei-Hand- Taster handelt es sich um einen Schalter, der mit beiden Händen bedient werden muss, so dass sichergestellt wird, dass sich beide Hände des jeweiligen Bedieners am Schalter befinden. Auch hier erfolgt nur ein Auslösen der Bewegung der Vorrichtung durch den ersten Benutzer, wenn der zweite Benutzer seinen Zwei-Hand Tasters zeitgleich betätigt. Dies ist jedoch weniger komfortabel, teurer, aufwändiger in der Steuerung und benötigt zudem mehr Platz.

Gemäß einer weiteren Ausführungsform wird an einem der Wechselplätze eine Lichtschranke eingesetzt, die erkennt, ob sich der andere Bediener im Gefahrenbereich des Blasrades befindet. Die Rotation des Blasrades kann nur dann durch den ersten Bediener ausgelöst werden, wenn sich der zweite Bediener nicht im Gefahrenbereich befindet. Hierbei kann allerdings nicht sichergestellt werden, dass der Wechsel der Blasform durch den zweiten Bediener bereits abgeschlossen ist. Insofern sollte eine zusätzliche Kommunikation zwischen den Bedienern vorgesehen sein, um die Bedienung des Blasformmoduls entsprechend zu koordinieren. Sollte der zweite Bediener während der Rotation in den Gefahrenbereich greifen etc., wird dies durch die Sicherheitslichtschranke erkannt und die Rotation des Blasrades sofort gestoppt.

Die Vorteile der erfindungsgemäßen Vorrichtung, des Systems und des Verfahrens liegen insbesondere darin, dass eine einfachere und schnellere Arbeitsweise beim manuellen Umrüsten von Vorrichtungen, insbesondere beim simultanen Auswechseln von Formatteilen, möglich ist. Gleichzeitig wird die Sicherheit der Bediener gewährleistet. Die Rüstzeit wird ohne große zusätzliche Kosten erheblich reduziert, so dass die Maschine schneller wieder in Betrieb genommen werden kann. Die exakt vorgegebene bzw. angefahrene Wechselposition ermöglicht zudem eine ergonomisch günstige Positionierung von Hilfsmitteln und benötigten Werkzeugen an Halterungen, so genannten Rüstboards etc.

Das Verfahren kann auch verwendet werden, um eine Vorrichtung mit halber oder variabler Beladung umzurüsten. Bei halber Beladung wird nur jedes zweite Formatteil umgerüstet, beispielsweise mit einer neuen Blasform bestückt. Bei einer variablen Beladung kann eine beliebige Anzahl von Formatteilen umgerüstet werden. Beispielsweise wird die 1., 2., 4., 5., 7., 8. usw. ausgestauscht, während die 3., 6., 9. etc. Blasform verbleibt. Durch eine entsprechende Steuerung der Bewegung der Vorrichtung kann somit zusätzlich eine größere Prozesssicherheit auch beim Rüsten mit nur einem Bediener erreicht werden, da der Gefahr der Verwechslung bzw. falscher Installation von Formen entgegen gewirkt wird.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figur 1 zeigt eine schematische Ansicht eines Blasformmoduls mit einem Arbeitsbereich zum Austausch der Blasformen gemäß dem bekannten Stand der Technik.
Figur 2 zeigt eine schematische Ansicht eines Blasformmoduls mit zwei Arbeitsbereichen zum simultanen Austausch von Blasformen.
Figur 3 zeigt den simultanen Austausch von Blasformen an zwei Wechselbereichen bei einem Blasformmodul entsprechend Figur 2.
Figur 4 zeigt schematisch eine Auswertung der Vorrichtungsparameter entsprechend Figur 3 durch die Steuerungseinheit.
Figur 5 zeigt den Austausch von Blasformen an nur einem Wechselbereich bei einem Blasformmodul entsprechend Figur 2.
Figur 6 zeigt schematisch eine Auswertung der Vorrichtungsparameter entsprechend Figur 5 durch die Steuerungseinheit.
Figur 7 zeigt eine Verarbeitungsvorrichtung mit zumindest teilweise linearem Verarbeitungsbereich.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

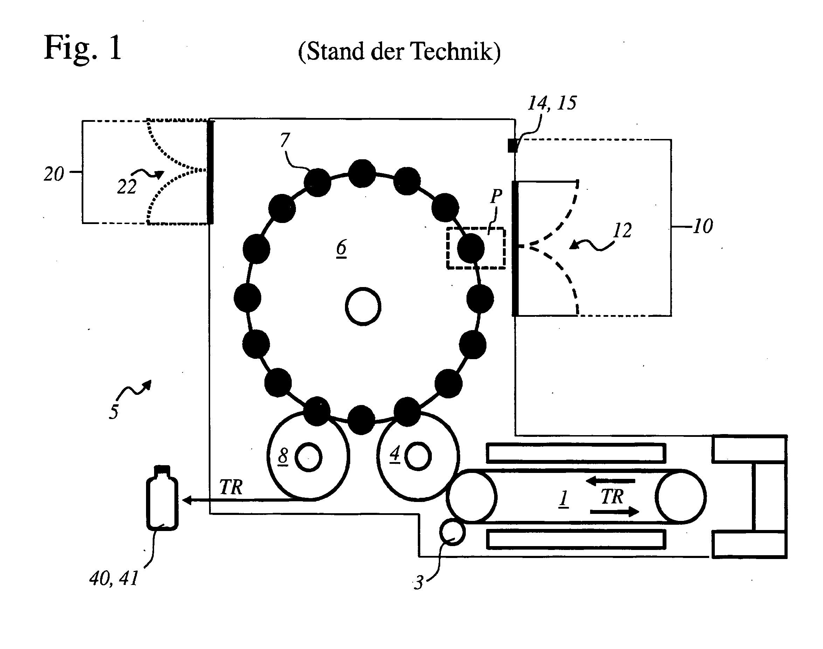

**Figur 1** zeigt eine schematische Ansicht eines Blasformmoduls 5 mit einem Arbeitsbereich 10 zum Austausch der Blasformen 7 gemäß dem bekannten Stand der Technik. In einem Blasformmodul 5 werden beispielsweise fertige Behälter 40, insbesondere Flaschen 41, aus so genannten Vorformlingen hergestellt. Die Vorformlinge werden zuerst über einen Einlaufstern 3 einer Heizstrecke 1 zugeführt und dort auf die für das Umformen notwendige Temperatur gebracht. Anschließend werden die Vorformlinge über einen Transferstern 4 an das Blasformmodul 5 übergeben. Insbesondere wird jeweils ein Vorformling an eine der an einem Blasrad 6 angebrachten Blasformen 7 übergeben.

Der Vorformling wird in der Blasform 7 zu dem entsprechenden Behälter 40, 41 umgeformt. Dieser wird anschließend in Transportrichtung TR über einen Auslaufstern 8 weiteren Verarbeitungsmaschinen (nicht dargestellt), beispielsweise einem Füller, einer Etikettiervorrichtung o.ä. zugeführt.

Soll mit dem Blasformmodul 5 eine andere Behälterform hergestellt werden, so müssen die Blasformen 7 entsprechend ausgetauscht werden. Im gezeigten Beispiel ist hierfür im Bereich der Wechselposition P ein Arbeits- bzw. Austauschbereich 10 vorgesehen, der eine Arbeitsöffnung 12, beispielsweise eine Türöffnung, eine Fensteröffnung o.ä. und eine Sicherheitsvorrichtung 14 umfasst. Die Sicherheitsvorrichtung 14 kann beispielsweise ein im Inneren des Blasmoduls 5 angebrachter Tast- oder Kippschalter 15 sein. Nach Austausch der Blasform 7 im Umrüstbereich P betätigt der Benutzer den Schalter 15. Dadurch wird eine Rotation des Blasrad 6 um einen bestimmten Winkel ausgelöst, so dass die nachfolgende auszutauschende Blasform 7 nunmehr in der Wechselposition P angeordnet ist und vom Bediener ausgetauscht werden kann. Die Sicherheitsvorrichtung 14 ist dabei so im Inneren des Blasformmoduls 5 angebracht, das sichergestellt ist, dass sich der Benutzer nicht im direkten Gefahrenbereich des Blasrades 6 befindet, während er den Schalter 15 bedient. Die Sicherheit des Benutzers wird weiterhin dadurch sicher gestellt, dass die Rotation des Blasrads nur sehr langsam erfolgt. Sollte eine Problemsituation entstehen, lässt der Benutzer den Schalter 15 los, was zu einem sofortigen Stillstand des Blasrades 6 führt.

Weiterhin kann das Blasformmodul 5 einen zweiten Arbeitsbereich 20 vorsehen, der beispielsweise benötigt wird um Wartungs- oder Reparaturarbeiten an dem Blasformmodul 5 durchzuführen. Aus Sicherheitsgründen können sowohl die erste Arbeitsöffnung 12 als auch die zweite Arbeitsöffnung 22 nur geöffnet werden, wenn sich das Blasmodul 5 im Stillstand befindet. Weiterhin ist ein Sicherheitsmechanismus vorgesehen, der aktiv verhindert, dass eine Bewegung des Blasrads von außerhalb angesteuert und / oder aktiviert werden kann, solange einer der Arbeitsöffnungen 12, 22 geöffnet ist. Bei dem aus dem Stand der Technik bekannten Blasformmodul 5 ist ein Öffnen der Arbeitsöffnung 22 des zweiten Arbeitsbereiches 20 nur möglich, wenn die Arbeitsöffnung 12 des ersten Arbeitsbereiches 10 geschlossen ist. D.h. es ist beispielsweise eine Steuerung vorgesehen, die erkennt, wenn die erste Arbeitsöffnung 12 geöffnet ist und einen Schließmechanismus aktiviert, der ein simultanes Öffnen der zweiten Arbeitsöffnung 22 verhindert. Entsprechend kann der erste Arbeitsbereich 10 auch nur geöffnet und darin gearbeitet werden, wenn die zweite Arbeitsöffnung 22 des zweiten Arbeitsbereiches 20 geschlossen ist.

Diese Sicherheitsvorkehrungen gewährleisten, dass immer nur ein Bediener Austausch, Wartungs- oder Reparaturarbeiten am Blasformmodul 5 vornimmt. Insbesondere wird dadurch gewährleistet, dass sich kein zweiter Bediener im Gefahrenbereich des Blasrades 6 befindet während ein erster Bediener beispielsweise nach erfolgtem Austausch einer Blasform 7 eine Rotation des Blasrades 6 auslöst, um weitere Blasformen 7 austauschen zu können.

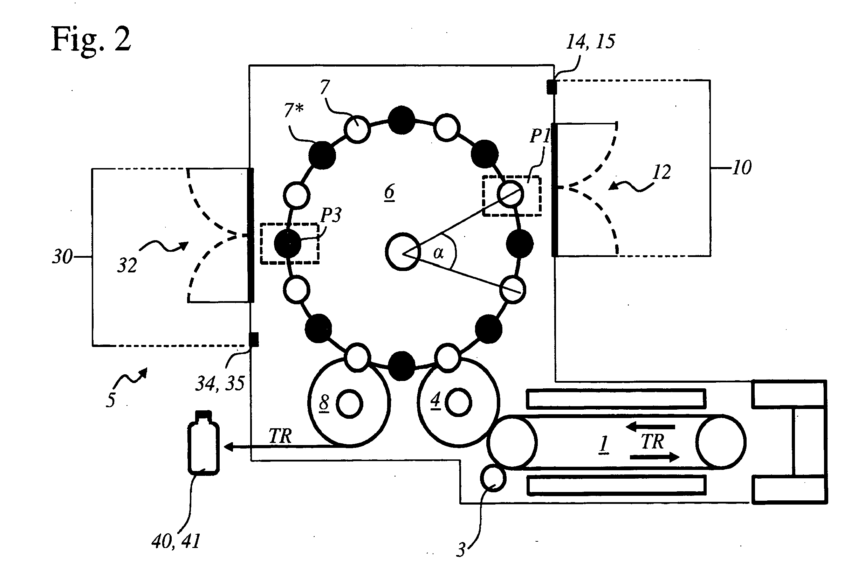

**Figur 2** zeigt ein Blasformmodul 5 mit einem ersten Arbeits- bzw. Austauschbereich 10 zum Austausch von Blasformen 7 durch einen ersten Bediener in einem ersten Wechselbereich P1 und einem zweiten Arbeits- bzw. Austauschbereich 30 mit einem zweiten Wechselbereich P3 zum simultanen Austausch weiterer Blasformen 7 durch einen zweiten Bediener.

Der zweite Arbeits- bzw. Austauschbereich 30 ist analog zum ersten Arbeitsbereich 10 aufgebaut und umfasst ebenfalls eine Arbeitsöffnung 32 sowie eine Sicherheitsvorrichtung 34, insbesondere einen Tipptaster o.ä. 35. Der Tipptaster 35 ist innerhalb des Blasformmoduls 5 so angeordnet, dass sich der Bediener, um diesen zu betätigen, zumindest teilweise aus dem Rotations- bzw. Gefahrenbereich des Blasrads 6 herausbewegen muss. Sind beide Arbeitsöffnungen 12, 32 gleichzeitig geöffnet, kann eine Rotation des Blasrades 6 nur erfolgen, wenn beide Bediener gleichzeitig den jeweiligen Schalter 15, 35 betätigen. Somit wird sichergestellt, dass sich beide Bediener nicht im Gefahrenbereich des Blasrades 6 befinden, während dieses rotiert um weitere Blasformen 7, 7* in die Wechselpositionen P1, P3 zu überführen. Weiterhin kann vorgesehen sein, dass die auszutauschende Blasform 7, 7* zusätzlich beispielsweise mit einem Lichtsignal, ein Lichtspot o.ä. markiert wird. Dadurch werden Verwechslungen vermieden. Insbesondere wird dadurch vermieden, dass eine bereits durch den ersten Bediener ausgetauschte Blasform 7, 7* durch den zweiten Bediener erneut ausgetauscht wird.

Vorzugsweise erfolgt eine Rotation des Blasrades 6 schrittweise um jeweils einen Winkel α, so dass nur jede zweite Blasform 7, 7* die Wechselposition P1 bzw. die Wechselposition P3 einnimmt. Somit wechselt erste Bediener beispielsweise alle Blasformen 7 an den Positionen 2n+1, wobei n = 0, 1, 2, ...., n. Der zweite Bediener wechselt stattdessen alle Blasformen 7* an den Positionen 2n, wobei n = 0, 1, 2, ...., n. Gegenüber dem bekannten Stand der Technik wird die für das Umrüsten des Blasmoduls benötigte Zeit somit weitgehend halbiert. Die Stillstandzeiten können somit deutlich verkürzt und der Durchsatz der Vorrichtung unter Berücksichtigung der Arbeitssicherheit erhöht werden.

Vorzugsweise ist mindestens eine Erkennungsvorrichtung vorgesehen, die den Zustand der Arbeitsöffnungen 12, 32 erkennt. Diese ist insbesondere mit einer Steuerung 50 gekoppelt und erkennt, ob die Arbeitsöffnungen 12, 32 jeweils geöffnet und / oder geschlossen sind.

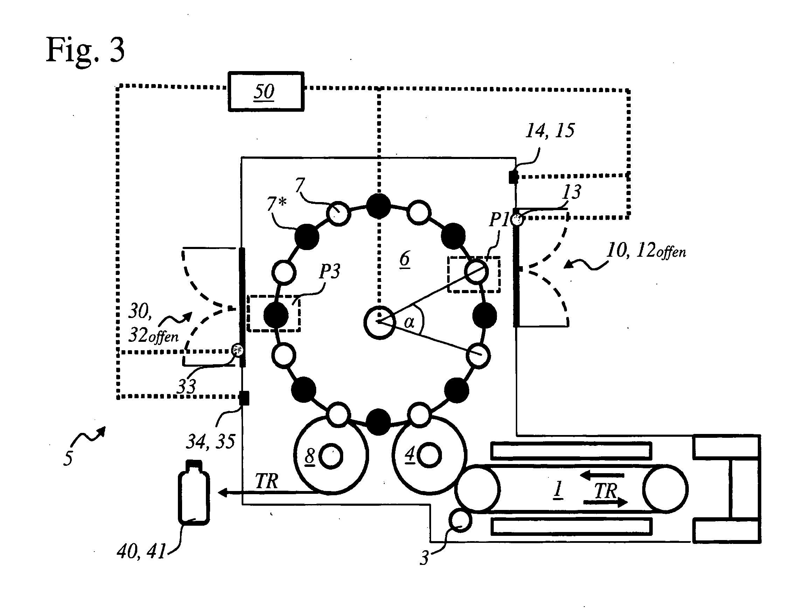

**Figur 3** stellt die Situation dar, bei der ein simultaner Austausch von Blasformen 7, 7* durch zwei Bediener an den beiden Wechselbereichen P1, P3 erfolgt. Dies ist nur möglich, wenn beide Arbeitsöffnungen 12 und 32 geöffnet sind. Die Steuerungseinheit 50 erkennt, beispielsweise über entsprechende, mit den Arbeitsöffnungen 12 und 32 und der Steuerungseinheit 50 gekoppelten Sensoren 13, 33, dass beide Arbeitsöffnungen 12 und 32 geöffnet sind. Wird durch einen der Bediener einer der Schalter 15 oder 35 betätigt, so verhindert die Steuerungseinheit 50 eine Rotation des Blasrades 6. Werden dagegen beide Schalter 15 und 35 gleichzeitig betätigt, wird die Rotation des Blasrades 6 um einen definierten Winkel α aktiviert, so dass sich die jeweils als nächste auszutauschende Blasform 7, 7* in der entsprechenden Wechselposition P1 oder P3 befindet. Wichtig ist hierbei insbesondere, dass die beiden Arbeitsbereiche 10, 30 und insbesondere die beiden Sicherheitsschalter 12, 32 so angeordnet sind, dass sie nicht durch einen Bediener gleichzeitig betätigt werden können.

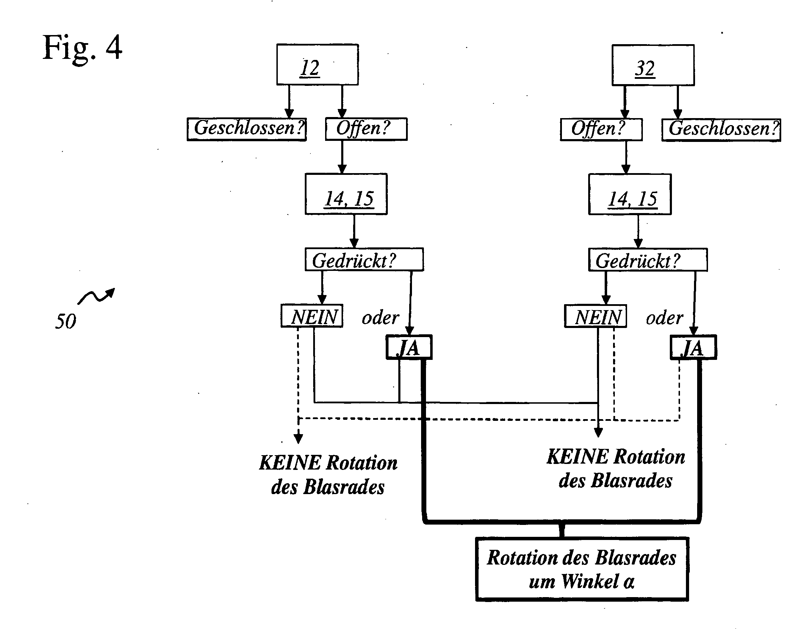

**Figur 4** stellt schematisch eine Auswertung der Vorrichtungsparameter entsprechend der in Figur 3 dargestellten Ausführungsform mit zwei geöffneten Arbeitsbereichen 10, 30 durch die Steuerungseinheit 50 dar.

Die Steuerungseinheit ermittelt beispielsweise mit Hilfe von Sensoren (vgl. **Figur 3**), ob die Arbeitsöffnungen 12, 32 der Arbeitsbereiche 10, 30 geöffnet und / oder geschlossen sind. Sind beide Arbeitsöffnungen 12, 32 offen dann wird durch die Steuerungseinheit eine definierte Rotation des Blasrades um einen Winkel α nur ausgelöst, wenn gleichzeitig beide Sicherheitsschalter 15 und 35 durch die beiden Bediener ausgelöst werden. Wird dagegen nur einer der beiden Schalter 15 oder 35 betätigt, erfolgt keine Rotation des Blasrades. Somit wird gewährleistet, dass eine Rotation des Blasrades nur erfolgt, wenn sich beide Bediener außerhalb des Gefahrenbereiches befinden.

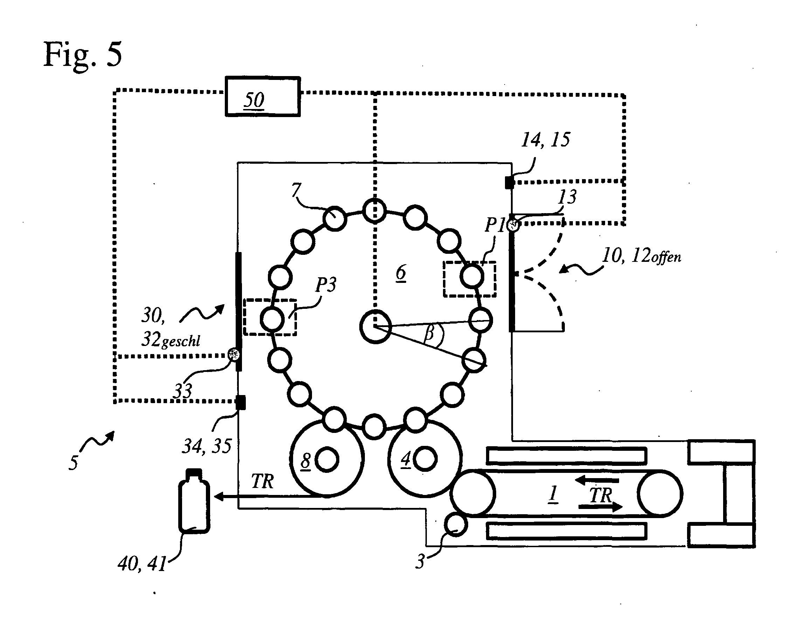

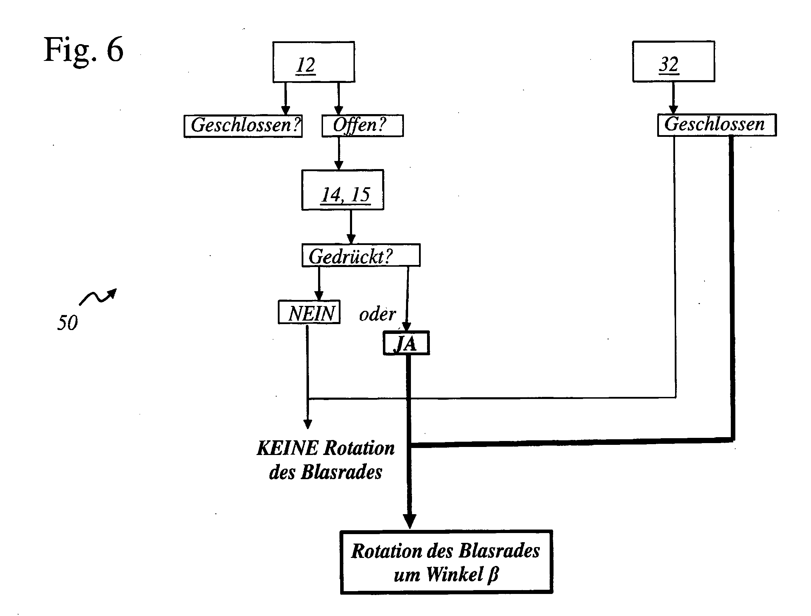

**Figur 5** stellt den Austausch von Blasformen 7 an nur einem Wechselbereich P1 im Arbeitsbereich 10 bei einem Blasformmodul 5 entsprechend **Figur 2** dar. **Figur 6** zeigt schematisch eine Auswertung der Vorrichtungsparameter entsprechend Figur 5 durch die Steuerungseinheit 50.

Die Steuerungseinheit 50 erkennt, dass nur die Arbeitsöffnung 12 im ersten Arbeitsbereich 10 geöffnet ist, während die Arbeitsöffnung 32 im zweiten Arbeitsbereich 30 geschlossen ist. Aufgrund der in der Steuerungseinheit 50 gespeicherten Parameter wird nunmehr eine Rotation des Blasrades 6 bereits ausgelöst, wenn nur der eine Sicherheitsschalter 15 betätigt wird, der dem Arbeitsbereich 10 zugeordnet ist. Beim Auslösen des Schalters 15 wird insbesondere die Rotation des Blasrads 6 um einen Rotationswinkel β ausgelöst, die die direkt nachfolgende Blasform 7 in die Wechselposition P1 bewegt. Die Beschreibung gilt analog für die Situation, bei der nur ein Austausch der Blasformen 7 im zweiten Arbeitsbereich 30, d.h. an der Wechselposition P3, erfolgt.

Ist also nur eine der Arbeitsöffnungen 12 oder 32 geöffnet, wird der doppelte Sicherheitsmechanismus durch die Steuerungseinheit 50 automatisch abgeschaltet und die Bewegung des Blasrad 6 wird durch Bedienung des entsprechenden Schalters 15 oder 35, der der jeweils geöffneten Arbeitsöffnung 12 oder 32 zugeordnet ist, ausgelöst. Somit ist auch bei dem Blasformmodul 5 gemäß **Figur 2** ein Wechsel der Blasformen 7 durch nur einen Bediener weiterhin möglich. Gemäß einer alternativen Ausführungsform kann in die Steuerungseinheit 50 eingegeben werden, ob das Umrüsten mit einem oder zwei Benutzern erfolgt. Die Steuerungseinheit 50 passt dann die Rotation des Blasrades 6 entsprechend an.

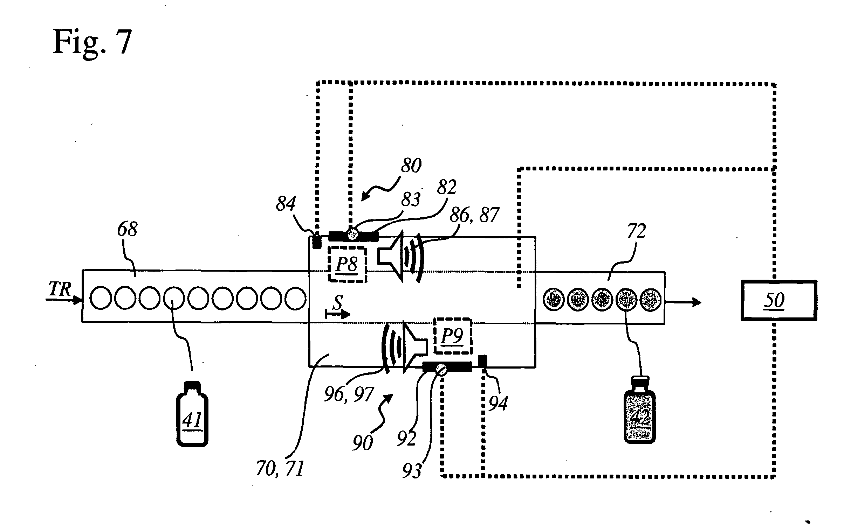

**Figur 7** zeigt eine Verarbeitungsvorrichtung 70 mit zumindest teilweise linearem Verarbeitungsbereich. Schematisch ist ein Füller 71 dargestellt, bei dem Flaschen 41 mit einem Getränk befüllt und verschlossen werden. Die leeren Flaschen 41 werden in Transportrichtung TR über ein erstes Transportband 68 zum Füller 71 transportiert. Im Füller 71 werden die Flaschen 41 befüllt und verschlossen. Die befüllten und verschlossenen Flaschen 42 werden über ein nachfolgendes Transportband 72 weiteren Verarbeitungsvorrichtungen, beispielsweise Verpackungsmaschinen o.ä. (nicht dargestellt) zugeführt.

An dem Füller 71 sind wiederum zwei Arbeitsbereiche 80, 90 zum Anpassen und Umrüsten vorgesehen, die jeweils einen Umrüstbereich P8, P9, eine Arbeitsöffnung 82, 92 und eine Aktivierungsvorrichtung 84, 94 umfassen. Im Umrüstbereich P8 des ersten Arbeitsbereichs 80 erfolgt bei geöffneter Arbeitsöffnung 82 beispielsweise eine Anpassung von Formatteilen an das jeweilige Produkt. Insbesondere erfolgt eine Anpassung an die jeweilige Form der zu befüllenden Flasche 40. Im Umrüstbereich P9 des zweiten Arbeitsbereichs 90 erfolgt beispielsweise ein Austausch der Verschließerköpfe. Diese müssen bei einem Produktwechsel ebenfalls angepasst werden. Hierbei sind wiederum Sensoren 83, 93 vorgesehen, die die Ist- Zustände der Arbeitsöffnungen 82, 92 an eine Steuerungseinheit 50 übermitteln. Die Steuerungseinheit 50 erkennt weiterhin die Aktivierung der Aktivierungsvorrichtungen 84, 94, koordiniert die gesamten ermittelten Daten und steuert die Neu- Positionierung der umzurüstenden Einheiten entsprechend an.

In der Figur 7 sind weiterhin Kommunikationsmittel 86, 96 in den Arbeitsbereichen 80, 90 vorgesehen, die eine Kommunikation der Bediener beispielsweise über eine Sprechfunkanlage 87, 97 ermöglichen.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Heizstrecke
- 3: Einlaufstern
- 4: Transferstern
- 5: Blasformmodul
- 6: Blasrad
- 7, 7*: Blasform
- 8: Auslaufstern
- 10: Arbeitsbereich
- 12: Arbeitsöffnung / Öffnungsbereich
- 13: Sensor
- 14: Sicherheitsvorrichtung
- 15: Tastschalter / Kippschalter
- 20: Arbeitsbereich
- 22: Arbeitsöffnung / Öffnungsbereich
- 30: Arbeitsbereich
- 32: Arbeitsöffnung / Öffnungsbereich
- 33: Sensor
- 34: Sicherheitsvorrichtung
- 35: Tastschalter / Kippschalter
- 40: Behälter
- 41: Flasche
- 42: befüllte und verschlossene Flasche
- 50: Steuerungseinheit
- 68: Transportband
- 70: Verarbeitungsvorrichtung
- 71: Füller
- 72: Transportband
- 80: Arbeitsbereich
- 82: Arbeitsöffnung / Öffnungsbereich
- 84: Aktivierungsvorrichtung
- 86: Kommunikationsmittel
- 87: Sprechfunkanlage
- 90: Arbeitsbereich
- 92: Arbeitsöffnung / Öffnungsbereich
- 94: Aktivierungsvorrichtung
- 96: Kommunikationsmittel
- 97: Sprechfunkanlage

- α, β: Rotationswinkel
- P, P1, P3, P8, P9: Umrüstbereich / Wechselposition
- S: Strecke
- TR: Transportrichtung

## Patentansprüche

1. Verfahren zum simultanen manuellen Umrüsten von mindestens zwei Einheiten bzw. simultanen Austausch von mindestens zwei Formatteilen (7, 7*) an einer Verarbeitungsvorrichtung (5, 70, 71) mit einem Arbeitsbereich (10) zum Anpassen der Verarbeitungsvorrichtung (5) an die jeweiligen Produkte, wobei der eine Arbeitsbereich (10) jeweils ein Umrüstbereich (P) und eine Arbeitsöffnung (12) umfasst, **dadurch gekennzeichnet, dass** die Verarbeitungsvorrichtung (5, 70, 71) mindestens zwei Arbeitsbereiche (10, 30, 80, 90) aufweist, die jeweils einen Umrüstbereich (P1, P3, P8, P9), eine Arbeitsöffnung (12, 32, 82, 92) und eine Aktivierungsvorrichtung (14, 34, 84, 94) umfassen, wobei die Arbeitsöffnungen (12, 32, 82, 92) jeweils einen geöffneten Umrüst- Zustand (12_{offen}, 32_{offen}, 82_{offen}, 92_{offen}) oder einen geschlossenen Verarbeitungs- Zustand (12_{geschl}, 32_{geschl}, 82_{geschl}, 92_{geschl}) einnehmen können, wobei
• mindestens zwei Arbeitsöffnungen (12, 32, 82, 92) zum simultanen Umrüsten der Verarbeitungsvorrichtung (5, 70, 71) geöffnet werden (12_{offen}, 32_{offen}, 82_{offen}, 92_{offen});
• der Ist- Zustand der Arbeitsöffnungen, d.h. offen oder geschlossen, der mindestens zwei Arbeitsbereiche (10, 30, 80, 90) ermittelt wird, insbesondere wobei ermittelt wird, welche Arbeitsöffnung (12, 32, 82, 92) offen ist;
• die Aktivierung von mindestens einer Aktivierungsvorrichtung (14, 34, 84, 94) erkannt wird;
• eine Neu- Positionierung von mindestens zwei umzurüstenden Einheiten bzw. Formatteilen (7, 7*) in die mindestens zwei Umrüstbereiche (P1, P3, P8, P9) angesteuert wird, wenn die Aktivierungsvorrichtungen (14, 34, 84, 94) aller geöffneter Arbeitsöffnungen (12, 32, 82, 92) gleichzeitig aktiviert sind oder
• eine Neu- Positionierung von mindestens zwei umzurüstenden Einheiten bzw. Formatteilen (7, 7*) in die mindestens zwei Umrüstbereiche (P1, P3, P8, P9) nicht angesteuert bzw. aktiv verhindert wird, wenn keine, eine oder nur ein Teil der Aktivierungsvorrichtungen (14, 34, 84, 94) der geöffneter Arbeitsöffnungen (12, 32, 82, 92) gleichzeitig betätigt werden.

2. Verfahren nach Anspruch 1, wobei die Aktivierungsvorrichtung (14, 34, 84, 94) durch Betätigen eines Tippschalters (15, 35) ausgelöst bzw. aktiviert wird.

3. Verfahren nach einem der voranstehenden Ansprüche, wobei die Verarbeitungsvorrichtung (5, 70, 71) einen Arbeitsstern (6) mit einer Mehrzahl von umzurüstenden Einheiten bzw. auszuwechselnden Formatteilen (7, 7*) umfasst, und wobei die Steuerungseinheit (50) eine Rotation des Arbeitssterns (6) um einen bestimmten Winkel (α, β) auslöst, so dass die als nächstes umzurüstenden Einheiten bzw. auszuwechselnden Formatteile (7, 7*) in den Umrüstbereichen (P1, P3, P8, P9) angeordnet werden.

4. Verfahren nach einem der Ansprüche 1 oder 2, wobei die Verarbeitungsvorrichtung (5, 70, 71) einen zumindest teilweise linearen Arbeitsbereich mit einer Mehrzahl von umzurüstenden Einheiten bzw. auszuwechselnden Formatteilen(7, 7*) umfasst, und wobei die Steuerungseinheit (50) eine Bewegung der Einheiten bzw. Formatteile (7, 7*) um eine bestimmte Strecke (S) auslöst, so dass die als nächstes umzurüstenden Einheiten bzw. auszuwechselnden Formatteile (7, 7*) in den Umrüstbereichen (P1, P3, P8, P9)angeordnet werden.

5. Verfahren nach einem der voranstehenden Ansprüche, wobei die NeuPositionierung der als nächstes umzurüstenden Einheiten bzw. auszuwechselnden Formatteile (7, 7*) entsprechend der Anzahl der Arbeitsbereiche (10, 30, 80, 90), an denen gleichzeitig umgerüstet bzw. ausgewechselt wird, gesteuert wird, insbesondere wobei der Rotationswinkel (α, β) bzw. die Bewegungsstrecke (S) für die umzurüstenden Einheiten bzw. auszuwechselnden Formatteile (7, 7*) in die Steuerungseinheit (50) eingegeben oder automatisch von der Steuerungseinheit (50) berechnet wird.

6. Verfahren nach einem der voranstehenden Ansprüche, wobei die Bediener miteinander kommunizieren und die gleichzeitige Aktivierung der Aktivierungsvorrichtungen (14, 34, 84, 94) koordinieren.

7. System zur Steuerung einer Verarbeitungsvorrichtung (5, 70, 71) beim Umrüsten oder Anpassen der Verarbeitungsvorrichtung (5, 70, 71) an neue Produkte (40, 41, 42), **dadurch gekennzeichnet, dass** das System Detektionsvorrichtungen (13, 33) zur Ermittlung des Öffnungszustands von Arbeitsöffnungen (12, 32, 82, 92) in mindestens zwei Arbeitsbereichen (10, 30, 80, 90) umfasst, wobei das System die Aktivierung von Aktivierungsvorrichtungen (14, 34, 84, 94) erfasst und den geöffneten Arbeitsöffnungen (12, 32, 82, 92) zuordnet und wobei das System eine Neu- Positionierung umzurüstender Einheiten oder auszutauschender Formatteile (7, 7*) ansteuert, wenn die Aktivierungsvorrichtungen (14, 34, 84, 94) aller geöffneter Arbeitsöffnungen (12, 32, 82, 92) gleichzeitig aktiviert sind.

8. Verarbeitungsvorrichtung (5, 70, 71) mit einem Arbeitsbereich (10) zum Anpassen der Verarbeitungsvorrichtung (5, 70, 71) an die verarbeiteten Produkte (40, 41, 42), wobei dem Arbeitsbereich (10) ein Umrüstbereich (P), eine verschließbare Arbeitsöffnung (12) und eine Aktivierungsvorrichtung (14) zugeordnet sind, **dadurch gekennzeichnet, dass** die Verarbeitungsvorrichtung (5, 70, 71) mindestens einen weiteren Arbeitsbereich (30, 80, 90) zum simultanen Umrüsten der Verarbeitungsvorrichtung (5, 70, 71) in mindestens zwei Umrüstbereichen (P1, P3, P8, P9) aufweist, wobei der Arbeitsbereich (30, 80, 90) einen Umrüstbereich (P3, P8, P9), eine verschließbare Arbeitsöffnung (32, 82, 92) und eine Aktivierungsvorrichtung (34, 84, 94) umfasst, wobei die mindestens zwei Arbeitsbereiche (10, 30, 80, 90) jeweils in einem geöffneten Umrüst- Zustand (12_{offen}, 32_{offen}, 82_{offen}, 92_{offen}) oder einen geschlossenen Verarbeitungs- Zustand (12_{geschl}, 32_{geschl}, 82_{geschl}, 92_{geschl}) vorliegen, wobei die Verarbeitungsvorrichtung (5, 70, 71) mindestens eine Detektionsvorrichtung (13, 33, 83, 93) zur Erfassung des Zustands der Arbeitsöffnungen (12_{offen}, 32_{offen}, 12_{gescnl}, 32_{geschl}) und / oder der Aktivierung der Aktivierungsvorrichtungen (14, 34) umfasst und wobei die Verarbeitungsvorrichtung (5, 70, 71) mindestens eine Steuerungseinheit zur Koordination der Daten der Detektionsvorrichtung (13, 33, 83, 93) und zu Steuerung der Neu- Positionierung von mindestens zwei umzurüstenden Einheiten bzw. Formatteilen (7, 7*) aufweist.

9. Verarbeitungsvorrichtung (5, 70, 71) nach Anspruch 8, wobei die Detektionsvorrichtung (13, 33, 83, 93) in die Steuerungseinheit (50) integriert ist.

10. Verarbeitungsvorrichtung (5, 70, 71) nach einem der Ansprüche 8 bis 9, wobei die Detektionsvorrichtung (13, 33, 83, 93) ein Kontaktsensor, ein Bilderkennungssensor, ein Magnetsensor oder eine Lichtschranke ist.

11. Verarbeitungsvorrichtung (5, 70, 71) nach einem der Ansprüche 8 bis 10, wobei die Aktivierungsvorrichtungen (14, 34, 84, 94) jeweils ein Tipptaster (15, 35) sind.

12. Verarbeitungsvorrichtung (5, 70, 71) nach einem der Ansprüche 8 bis 11, wobei die Arbeitsbereiche (10, 30) jeweils ein Kommunikationsmittel (86, 96) umfassen.

13. Verarbeitungsvorrichtung (5, 70, 71) nach einem der Ansprüche 8 bis 11, wobei die Verarbeitungsvorrichtung (5, 70, 71) eine Umformungseinrichtung, insbesondere ein Blasformmodul umfasst.

## Claims

1. A method for simultaneously and manually converting at least two units or for simultaneously exchanging at least two format parts (7, 7*) at a processing apparatus (5, 70, 71) with a working area (10) for adapting the processing apparatus (5) to the respective products, wherein the one working area (10) comprises, respectively, a conversion area (P) and a work opening (12), **characterised in that** the processing apparatus (5, 70, 71) has at least two working areas (10, 30, 80, 90), which each comprise a conversion area (P1, P3, P8, P9), a work opening (12, 32, 82, 92), and an actuating apparatus (14, 34, 84, 94), wherein the work openings (12, 32, 82, 92) can each take an open conversion state (12_{offen}, 32_{often}, 82_{offen}, 92_{offen}) or a closed processing state (12_{geschl}, 32_{geschl}, 82_{geschl,} 92_{geschl}) wherein
• at least two work openings (12, 32, 82, 92) are opened (12_{offen}, 32_{offen}, 82_{offen}, 92_{offen}) for simultaneously converting the processing apparatus (5, 70, 71);
• the actual state of the work openings, i.e. open or closed, of the at least two working areas (10, 30, 80, 90) is determined, wherein it is particularly determined which work opening (12, 32, 82, 92) is open;
• the actuation of at least one actuating apparatus (14, 34, 84, 94) is detected;
• a repositioning into the at least two conversion areas (P1, P3, P8, P9) of at least two units or format parts (7, 7*) to be converted is controlled when the actuating apparatuses (14, 34, 84, 94) of all opened work openings (12, 32, 82, 92) are simultaneously actuated; or
• a repositioning into the at least two conversion areas (P1, P3, P8, P9) of at least two units or format parts (7, 7*) to be converted is not controlled or is actively prevented when none, one, or only a part of the actuating apparatuses (14, 34, 84, 94) of the opened work openings (12, 32, 82, 92) are simultaneously actuated.

2. The method as recited in claim 1 wherein the actuating apparatus (14, 34, 84, 94) is triggered or actuated by operating a hold-to-run control (15, 35).

3. The method as recited in one of the previous claims wherein the processing apparatus (5, 70, 71) comprises a work star wheel (6) with a plurality of units to be converted or format parts to be exchanged (7, 7*), and wherein the control unit (50) triggers a rotation of the work star wheel (6) by a certain angle (α, β) in such a manner that the next units to be converted or format parts to be exchanged (7, 7*) are arranged in the conversion areas (P1, P3, P8, P9).

4. The method as recited in one of the claims 1 or 2 wherein the processing apparatus (5, 70, 71) comprises an at least partly linear working area with a plurality of units to be converted or format parts to be exchanged (7, 7*), and wherein the control unit (50) triggers a movement by a certain distance (S) of the units or format parts (7, 7*) in such a manner that the next units to be converted or format parts to be exchanged (7, 7*) are arranged in the conversion areas (P1, P3, P8, P9).

5. The method as recited in one of the previous claims wherein the repositioning of the next units to be converted or format parts to be exchanged (7, 7*) is controlled according to the number of working areas (10, 30, 80, 90) where conversions or exchanges are simultaneously performed, in particular wherein the angle of rotation (α, β) or the distance of movement (S) for the units to be converted or format parts to be exchanged (7, 7*) is entered into the control unit (50) or is automatically calculated by the control unit (50).

6. The method as recited in one of the previous claims wherein the operators communicate with each other and coordinate the simultaneous actuation of the actuating apparatuses (14, 34, 84, 94).

7. A system for controlling a processing apparatus (5, 70, 71) in converting or adapting the processing apparatus (5, 70,71) to new products (40, 41, 42), **characterised in that** the system comprises detection apparatuses (13, 33) for determining the opening state of work openings (12, 32, 82, 92) in at least two working areas (10, 30, 80, 90) wherein the system detects the actuation of actuating apparatuses (14, 34, 84, 94) and assigns them to the opened work openings (12, 32, 82, 92), and wherein the system controls a repositioning of units to be converted or format parts to be exchanged (7,7*) when the actuating apparatuses (14, 34, 84, 94) of all opened work openings (12, 32, 82, 92) are simultaneously actuated.

8. A processing apparatus (5, 70, 71) with a working area (10) for adapting the processing apparatus (5, 70, 71) to the products being processed (40, 41, 42) wherein the working area (10) is associated with a conversion area (P), a closable work opening (12), and an actuating apparatus (14), **characterised in that** the processing apparatus (5, 70, 71) comprises at least one further working area (30, 80, 90) for the simultaneous conversion of the processing apparatus (5, 70, 71) in at least two conversion areas (P1, P3, P8, P9), wherein the working area (30, 80, 90) comprises a conversion area (P3, P8, P9), a closable work opening (32, 82, 92), and an actuating apparatus (34, 84, 94), wherein the at least two working areas (10, 30, 80, 90) each have an open conversion state (12_{offen}, 32_{offen}, 82_{offen}, 92_{offen}) or a closed processing state (1 2_{geschl}, 32_{geschl}, 82_{geschl}, 92_{geschl}), wherein the processing apparatus (5, 70, 71) comprises at least one detection apparatus (13, 33, 83, 93) for detecting the state of the work openings (12offen, 32offen, 12geschl, 32geschl) and/or for actuating the actuating apparatuses (14, 34), and wherein the processing apparatus (5, 70, 71) has at least one control unit for coordinating the data from the detection apparatus (13, 33, 83, 93) and for controlling the repositioning of at least two units or format parts to be converted (7, 7*).

9. The processing apparatus (5, 70, 71) as recited in claim 8 wherein the detection apparatus (13, 33, 83, 93) is integrated into the control unit (50).

10. The processing apparatus (5, 70, 71) as recited in one of the claims 8 to 9 wherein the detection apparatus (13, 33, 83, 93) is a contact sensor, an image recognition sensor, a magnetic sensor, or a light barrier.

11. The processing apparatus (5, 70, 71) as recited in one of the claims 8 to 10 wherein the actuating apparatuses (14, 34, 84, 94) are each a hold-to-run control (15, 35).

12. The processing apparatus (5, 70, 71) as recited in one of the claims 8 to 11 wherein the working areas (10, 30) each comprise a communication medium (86, 96).

13. The processing apparatus (5, 70, 71) as recited in one of the claims 8 to 11 wherein the processing apparatus (5, 70, 71) comprises a reshaping device, in particular a blow moulding module.

## Revendications

1. Procédé de conversion manuelle simultanée d'au moins deux unités ou bien d'échange simultané d'au moins deux pièces de format (7, 7*) sur un dispositif de traitement (5, 70, 71) avec une zone de travail (10) pour adapter ledit dispositif de traitement (5) aux produits respectifs, ladite une zone de travail (10) comprenant respectivement une zone de conversion (P) et une ouverture de travail (12), **caractérisé par le fait que** le dispositif de traitement (5, 70, 71) présente au moins deux zones de travail (10, 30, 80, 90) qui comprennent chacune une zone de conversion (P1, P3, P8, P9), une ouverture de travail (12, 32, 82, 92) et un dispositif d'activation (14, 34, 84, 94), lesdites ouvertures de travail (12, 32, 82, 92) pouvant prendre chacune un état de conversion ouvert (12_{offen}, 32_{offen}, 82_{offen}, 92_{offen}) ou un état de traitement fermé (12_{geschl}, 32_{geschl}, 82_{geschl}, 92_{geschl}), dans lequel
• au moins deux ouvertures de travail (12, 32, 82, 92) sont ouvertes (12_{offen}, 32_{offen}, 82_{offen}, 92_{offen}) pour la conversion simultanée du dispositif de traitement (5, 70, 71);
• l'état réel des ouvertures de travail, c'est-à-dire ouvert ou fermé, desdites au moins deux zones de travail (10, 30, 80, 90) est détecté, en particulier, il est détecté quelle ouverture de travail (12, 32, 82, 92) est ouverte;
• l'activation d'au moins un dispositif d'activation (14, 34, 84, 94) est identifiée;
• un repositionnement d'au moins deux unités ou bien pièces de format (7, 7*) à convertir, dans lesdites au moins deux zones de conversion (P1, P3, P8, P9) est commandé lorsque les dispositifs d'activation (14, 34, 84, 94) de l'ensemble des ouvertures de travail (12, 32, 82, 92) ouvertes sont activés simultanément, ou
• un repositionnement d'au moins deux unités ou bien pièces de format (7, 7*) à convertir, dans lesdites au moins deux zones de conversion (P1, P3, P8, P9) n'est pas commandé ou bien est empêché de manière active lorsqu'aucun, un ou une partie seulement des dispositifs d'activation (14, 34, 84, 94) des ouvertures de travail (12, 32, 82, 92) ouvertes (ne) sont actionnés simultanément.

2. Procédé selon la revendication 1, dans lequel le dispositif d'activation (14, 34, 84, 94) est déclenché ou bien activé en actionnant un commutateur à impulsion (15, 35).

3. Procédé selon l'une quelconque des revendications précédentes, dans lequel le dispositif de traitement (5, 70, 71) comprend une étoile de travail (6) avec une pluralité d'unités à convertir ou bien de pièces de format (7, 7*) à échanger, et dans lequel l'unité de commande (50) déclenche une rotation de l'étoile de travail (6) sur un angle (α, β) déterminé, de sorte que les unités à convertir ensuite ou bien pièces de format (7, 7*) à échanger ensuite sont disposé(e)s dans les zones de conversion (P1, P3, P8, P9).

4. Procédé selon l'une quelconque des revendications 1 ou 2, dans lequel le dispositif de traitement (5, 70, 71) comprend une zone de travail au moins en partie linéaire, avec une pluralité d'unités à convertir ou bien de pièces de format (7, 7*) à échanger, et dans lequel ladite unité de commande (50) déclenche un mouvement d'une distance (S) déterminée des unités ou bien pièces de format (7, 7*), de sorte que les unités à convertir ensuite ou bien pièces de format (7, 7*) à échanger ensuite sont disposés dans les zones de conversion (P1, P3, P8, P9).

5. Procédé selon l'une quelconque des revendications précédentes, dans lequel le repositionnement des unités à convertir ensuite ou bien pièces de format (7, 7*) à échanger ensuite est commandé selon le nombre des zones de travail (10, 30, 80, 90) sur lesquelles on convertit ou bien échange simultanément, dans lequel, en particulier l'angle de rotation (α, β) ou bien la distance de mouvement (S) pour les unités à convertir ou bien pièces de format (7, 7*) à échanger sont entrés dans ladite unité de commande (50) ou sont calculés automatiquement par ladite unité de commande (50).

6. Procédé selon l'une quelconque des revendications précédentes, dans lequel les opérateurs communiquent entre eux et coordonnent l'activation simultanée des dispositifs d'activation (14, 34, 84, 94).

7. Système de commande d'un dispositif de traitement (5, 70, 71) lors de la conversion ou l'adaptation du dispositif de traitement (5, 70, 71) à de nouveaux produits (40, 41, 42), **caractérisé par le fait que** le système comprend des dispositifs de détection (13, 33) destinés à détecter l'état d'ouverture d'ouvertures de travail (12, 32, 82, 92) dans au moins deux zones de travail (10, 30, 80, 90), le système détectant l'activation de dispositifs d'activation (14, 34, 84, 94) et l'associant aux ouvertures de travail (12, 32, 82, 92) ouvertes, et le système commandant un repositionnement d'unités à convertir ou de pièces de format (7, 7*) à échanger, lorsque les dispositifs d'activation (14, 34, 84, 94) de l'ensemble des ouvertures de travail (12, 32, 82, 92) ouvertes sont activés simultanément.

8. Dispositif de traitement (5, 70, 71) avec une zone de travail (10) pour adapter le dispositif de traitement (5, 70, 71) aux produits (40, 41, 42) traités, dans lequel une zone de conversion (P), une ouverture de travail (12) apte à être fermée et un dispositif d'activation (14) sont associés à la zone des travail (10), **caractérisé par le fait que** le dispositif de traitement (5, 70, 71) présente au moins une autre zone de travail (30, 80, 90) pour la conversion simultanée du dispositif de traitement (5, 70, 71) dans au moins deux zones de conversion (P1, P3, P8, P9), la zone de travail (30, 80, 90) comprenant une zone de conversion (P3, P8, P9), une ouverture de travail (32, 82, 92) apte à être fermée et un dispositif d'activation (34, 84, 94), lesdites au moins deux zones de travail (10, 30, 80, 90) étant chacune dans un état de conversion ouvert (12_{offen}, 32_{offen}, 82_{offen}, 92_{offen}) ou un état de traitement fermé (12_{geschl}, 32_{geschl}, 82_{geschl}, 92_{geschl}), le dispositif de traitement (5, 70, 71) comprenant au moins un dispositif de détection (13, 33, 83, 93) pour détecter l'état des ouvertures de travail (12_{offen}, 32_{offen}, 12_{geschl}, 32_{geschl}) et/ou l'activation des dispositifs d'activation (14, 34), et le dispositif de traitement (5, 70, 71) présentant au moins une unité de commande pour coordonner les données du dispositif de détection (13, 33, 83, 93) et pour commander le repositionnement d'au moins deux unités ou bien pièces de format (7, 7*) à convertir.

9. Dispositif de traitement (5, 70, 71) selon la revendication 8, dans lequel le dispositif de détection (13, 33, 83, 93) est intégré à ladite unité de commande (50).

10. Dispositif de traitement (5, 70, 71) selon l'une quelconque des revendications 8 à 9, dans lequel le dispositif de détection (13, 33, 83, 93) est un capteur de contact, un capteur de reconnaissance d'images, un capteur magnétique ou un barrage photoélectrique.

11. Dispositif de traitement (5, 70, 71) selon l'une quelconque des revendications 8 à 10, dans lequel les dispositifs d'activation (14, 34, 84, 94) sont chacun un bouton-poussoir à impulsion (15, 35).

12. Dispositif de traitement (5, 70, 71) selon l'une quelconque des revendications 8 à 11, dans lequel les zones de travail (10, 30) comprennent chacune un moyen de communication (86, 96).

13. Dispositif de traitement (5, 70, 71) selon l'une quelconque des revendications 8 à 11, dans lequel le dispositif de traitement (5, 70, 71) comprend un dispositif de formage, en particulier un module de moules de soufflage.
